# EUROPÄISCHE PATENTSCHRIFT

(11) **EP 3 983 154 B1**
(45) Veröffentlichungstag und Bekanntmachung des Hinweises auf die Patenterteilung: **02.10.2024**
(21) Anmeldenummer: 20754761.3
(22) Anmeldetag: 12.08.2020
(51) Int. Cl.: B22F 9/08, B33Y 80/00, C22C 1/04, H05B 6/18, H05B 6/36

(54) **EIGA-SPULE MIT RINGFÖRMIGEN WINDUNGEN**
EIGA COIL HAVING ANNULAR TURNS
BOBINE EIGA DOTÉE DE SPIRES ANNULAIRES

(30) Priorität: 15.08.2019 DE 102019121998
(43) Veröffentlichungstag der Anmeldung: 20.04.2022
(73) Patentinhaber: ALD Vacuum Technologies GmbH, 63457 Hanau (DE)
(72) Erfinder: SPITANS, Sergejs, 90409 Nürnberg (DE); WINTON, Markus, 61184 Karben (DE); PFAHLS, Franz, 63628 Bad Soden-Salmünster (DE); FRANZ, Henrik, 63579 Freigericht-Horbach (DE); RADTKE, Hans-Jürgen, 63826 Geiselbach (DE)
(74) Vertreter: Fuchs Patentanwälte Partnerschaft mbB
(86) Internationale Anmeldenummer: PCT/EP2020/072635
(87) Internationale Veröffentlichungsnummer: WO 2021/028476

(56) Entgegenhaltungen:
- WO-A1-2015/092008
- WO-A1-2019/002122
- DE-A1- 4 102 101

## Beschreibung

Die vorliegende Erfindung betrifft eine EIGA-Spule (EIGA, engl.: "Electrode Induction Melting (Inert) Gas Atomization") zum Anschmelzen einer Elektrode für die Herstellung hochwertiger und reiner Metallpulver. Eine EIGA-Spule bezeichnet eine Induktionsspule für eine EIGA-Anlage zum Durchführen eines EIGA-Verfahrens. Ferner betrifft die vorliegende Erfindung eine Vorrichtung zum Durchführen eines EIGA-Verfahrens sowie ein EIGA-Verfahren zum Herstellen von hochreinem Metallpulver.

### Hintergrund der Erfindung

Das EIGA-Verfahren zur keramikfreien Herstellung hochreiner Metall- bzw. Edelmetallpulver, wie beispielsweise Pulver aus Titan-, Zirkonium-, Niob- und Tantallegierungen, basiert auf der Durchführung eines Elektroden-Induktionsschmelzvorgangs. Eine vertikal aufgehängte, rotierende Elektrode wird unter Vakuum oder unter Inertgasatmosphäre kontinuierlich einer darunter angeordneten konischen Induktionsspule (EIGA-Spule) zugeführt und mittels dieser berührungslos an- bzw. abgeschmolzen. Die Rotationsbewegung der Elektrode um die eigene Längsachse sorgt dabei für ein gleichförmiges Schmelzen der Elektrode. Ein durch das An- bzw. Abschmelzen erzeugter Schmelzstrahl fließt sodann durch eine unter der Induktionsspule (EIGA-Spule) angeordnete Inertgasdüse und wird hier verdüst und zerstäubt. Anschließend erstarrt der Nebel aus Mikrotropfen in dem nachgelagerten Verdüsungsturm und bildet ein sphärisch geformtes, feinkörniges Pulver. Das gebildete Pulver wird in einem vakuumdichten Behälter aufgefangen und gesammelt.

Für das EIGA-Verfahren können Stangenelektroden aus einem gewünschten Metall oder einer Speziallegierung verwendet werden. Insbesondere können diese Elektroden einen Durchmesser von bis zu 150 mm und eine Läng von bis zu 1000 mm haben.

Die konische Gestalt der EIGA-Spule (Induktionsspule) und eine eingestellte Generatorfrequenz sind auf das Schmelzen der Elektrode und das Abtropfen der Schmelze von einem Ende der Elektrode optimiert. Herkömmliche EIGA-Spulen sind in Form einer konischen Helix oder konisch verlaufenden Schraubenlinie ausgebildet. Hierzu wird in der Praxis ein Kupferrohr, das die Windungen der EIGA-Spule bildet, über eine vordefinierte Form gewickelt.

Ein EIGA-Verfahren der beschriebenen Art sowie eine zugehörige EIGA-Anlage sind beispielsweise in dem Dokument DE 41 02 101 A1 offenbart.

WO 2015/092008 A1 betrifft tiegelfreies Schmelzen eines Materials und Zerstäuben des geschmolzenen Materials zum Herstellen von Pulver. In einer Ausführung umfasst eine zum Schmelzen eines Materialstabs dienende Induktionsspule mehrere elektrisch parallel geschaltete Windungen in Form von Manschetten, deren Innen- und Außenflächen jeweils Konusausschnitte bilden, und die jeweils einen Querschnitt in Form eines Parallelogramms aufweisen und in Richtung der Spulenachse voneinander gleich beabstandet sind.

WO 2019/002122 A1 betrifft die Herstellung eines Kupfer aufweisenden Bauteils mittels selektivem Lasersintern.

Bei der Durchführung des EIGA-Verfahrens kann es bei bekannten EIGA-Anlagen dazu kommen, dass von der Elektrode abgeschmolzene Tropfen geschmolzenen Metalls nicht exakt durch die Inertgasdüse hindurch fallen. Stattdessen fallen einige Tropfen beispielsweise auf den Rand oder einen Rahmen der kalten Inertgasdüse, erstarren dort und können unter Umständen die Düse teilweise oder vollständig verstopfen. Auch können abgeschmolzene Tropfen auf die Induktionsspule treffen und einen Kurzschluss verursachen, der den Verfahrensablauf unterbricht.

Es ist daher eine Aufgabe der vorliegenden Erfindung, die Nachteile aus dem Stand der Technik zu überwinden. Insbesondere besteht eine Aufgabe der Erfindung darin, eine EIGA-Spule, eine Vorrichtung zum Durchführen eines EIGA-Verfahrens und ein Verfahren zum Herstellen von hochreinem Metallpulver bereitzustellen, die eine Verunreinigung und/oder Beschädigung der EIGA-Anlage durch von der Elektrode abgeschmolzene Tropfen vermeideen.

Die Aufgaben werden durch eine EIGA-Spule zum Anschmelzen einer Elektrode, eine Vorrichtung zum Durchführen eines EIGA-Verfahrens und ein Verfahren zum Herstellen von hochreinem Metallpulver gemäß den unabhängigen Patentansprüchen gelöst. Weiterbildungen und Ausführungsformen der EIGA-Spule, der Vorrichtung und des Verfahrens sind Gegenstand der abhängigen Ansprüche und der nachstehenden Beschreibung.

### Beschreibung der Erfindung

Die Erfindung ist durch die angefügten unabhängigen Patentansprüche definiert. Vorteilhafte Ausgestaltungen der Erfindung sind in den abhängigen Ansprüchen definiert.

Die erfindungsgemäße EIGA-Spule zum An- und Abschmelzen einer Elektrode umfasst eine Mehrzahl von in Bezug auf eine Mittelachse der EIGA-Spule koaxial zueinander angeordneten und axial voneinander beabstandeten Windungen. Die Mittelachse der EIGA-Spule ist koaxial zu einer Längsachse der Elektrode.

Im Sinne der vorliegenden Erfindung bezeichnet der Begriff EIGA-Spule eine Induktionsspule für eine EIGA-Anlage bzw. zum Durchführen eines EIGA-Verfahrens. Die EIGA-Spule kann wenigstens zwei Windungen, vorzugsweise wenigstens drei Windungen oder auch mehr als drei Windungen umfassen.

Erfindungsgemäß ist jede der Mehrzahl von Windungen in Gestalt eines durch einen Spalt unterbrochenen Rings ausgebildet. Die EIGA-Spule umfasst somit eine der Anzahl von Windungen entsprechende Anzahl von Ringen, wobei jeder der Ringe durch einen Spalt geringer Breite unterbrochen und somit nicht geschlossen ist. Genauer gesagt ist jeder der Ringe ein Ringsegment mit einem ersten Ende und einem zweiten Ende, wobei der zugehörige Spalt zwischen den beiden Enden des Ringsegments liegt. Da jedes Ringsegment aufgrund der sehr geringen Breite des zugehörigen Spalts einen nahezu vollständigen Ring bildet, wird es im Rahmen der senkrechten Ebene erstreckt, sind mittels der erfindungsgemäßen EIGA-Spule azimutal symmetrische Lorentz-Kräfte erzeugbar, die auf die Elektrode wirken. Da sich diese auf die Elektrode wirkenden azimutal symmetrischen Lorentz-Kräfte gegenseitig ausgleichen, wird eine laterale Auslenkung der Elektrode verhindert und die Elektrode bleibt während des gesamten EIGA-Verfahrens koaxial zu der Mittelachse der EIGA-Spule. Hierdurch wird sichergestellt, dass eine untere Spitze der Elektrode, die mittels der EIGA-Spule angeschmolzen wird, exakt über dem Zentrum der Inertgasdüse ausgerichtet bleibt, sodass ein erzeugter Schmelzstrahl oder Tropfen geschmolzenem Metalls stets mittig durch die Düse hindurch fällt, ohne den Rand der Düse zu berühren.

Bei der aus dem Stand der Technik bekannten helixförmigen Struktur der EIGA-Spule haben einander gegenüberliegende Windungsabschnitte unterschiedliche Abstände von der Elektrode. Die Erfinder der vorliegenden Erfindung haben erkannt, dass die von solchen EIGA-Spulen erzeugten und auf die Elektrode wirkenden Lorentz-Kräfte daher azimutal asymmetrisch sind und die Elektrode aus ihrer vertikalen Orientierung auslenken. Es entsteht somit ein Auslenkungswinkel zwischen der Mittelachse der EIGA-Spule und der Längsachse der Elektrode. Die untere Spitze der Elektrode befindet sich nicht mehr zentral über der Inertgasdüse. Hierdurch können von der Elektrode abgeschmolzene Tropfen auf den Rand oder einen Rahmen der kalten Inertgasdüse treffen, dort erstarren und unter Umständen die Düse teilweise oder vollständig verstopfen. Auch können abgeschmolzene Tropfen auf die Induktionsspule treffen und diese verunreinigen oder einen Kurzschluss verursachen. Zudem kann es vorkommen, dass die Elektrode selbst mit der EIGA-Spule in Berührung gelangt, was zu einem Kurzschluss führen kann. Diese negativen Effekte werden noch zusätzlich verstärkt, da die Elektrode kontinuierlich um die ausgelenkte Längsachse rotiert. Diese Nachteile können durch die erfindungsgemäße EIGA-Spule und die damit erzeugbaren azimutal symmetrisch auf die Elektrode wirkenden Lorentz-Kräfte vermindert werden.

In einer Weiterbildung der EIGA-Spule kann sich der Verbindungsabschnitt in einer Ebene der Mittelachse erstrecken, d.h. in einer Ebene, in der die vertikale Mittelachse der EIGA-Spule liegt. Der Verbindungsabschnitt kann sich zum Beispiel parallel zu der Mittelachse der EIGA-Spule erstrecken. Der Verbindungsabschnitt kann sich im rechten Winkel zu den Ebenen der Windungen erstrecken. Insbesondere kann sich jeder der Verbindungsabschnitte, die jeweils benachbarte Windungen miteinander verbinden, auf die vorstehend beschriebene Art relativ zu der Mittelachse der EIGA-Spule erstrecken. Im montierten Zustand können sich die Windungen beispielsweise in horizontaler Richtung und/oder die Verbindungsabschnitte beispielsweise in vertikaler Richtung erstrecken.

Gemäß der Erfindung ist der Spalt zwischen 0,5 mm und 30 mm breit sein, vorzugsweise zwischen 2 mm und 20 mm, weiter bevorzugt zwischen 5 mm und 10 mm. Der Spalt kann wenigstens 0,5 mm breit sein, insbesondere wenigstens 2 mm, vorzugsweise wenigstens 5 mm. Der Spalt ist 30 mm oder kleiner, insbesondere 20 mm oder kleiner, vorzugsweise 10 mm oder kleiner. Die Spaltbreite bezeichnet hier den Abstand zwischen dem ersten Ende und dem zweiten Ende der zugehörigen Windung bzw. des zugehörigen Rings. Die vorstehenden Bereiche der Spaltbreiten können für den Spalt jeder Windung der EIGA-Spule gelten. Die Spalte der verschiedenen Windungen können dieselbe Breite oder unterschiedliche Breiten haben. Eine Spaltbreite zwischen 0,5 mm und 30 mm vorzugsweise zwischen 2 mm und 20 mm, weiter bevorzugt zwischen 5 mm und 10 mm kann sicherstellen, dass die Gesamtanordnung der EIGA-Spule ausreichend azimutal symmetrisch ist, um das Aufbringen im Wesentlichen und ausreichend azimutal symmetrischer Lorentz-Kräfte auf die Elektrode zu gewährleisten.

Eine Windung der Mehrzahl von Windungen der EIGA-Spule, die den größten Innendurchmesser aufweist, kann einen Innendurchmesser zwischen 40 mm und 300 mm haben. Die Maße der Windungen der EIGA-Spule, insbesondere die Maße der obersten Windung der EIGA-Spule, d.h. der der Aufhängung der Elektrode am nächsten liegende Windung, kann nach Maßgabe der Dimensionen der abzuschmelzenden Elektrode gewählt werden. Eine Windung der Mehrzahl von Windungen, die den geringsten Innendurchmesser aufweist, kann einen Innendurchmesser zwischen 10 mm und 100 mm haben, vorzugsweise zwischen 20 mm und 50 mm. Die Windung mit dem geringsten Innendurchmesser kann einen Innendurchmesser von wenigstens 10 mm, vorzugsweise von wenigstens 20 mm haben. Die Windung mit dem geringsten Innendurchmesser kann einen Innendurchmesser von 100 mm oder weniger, vorzugsweise von 50 mm oder weniger haben. Es versteht sich, dass EIGA-Spulen mit Windungen vergleichsweise großen Innendurchmessers vergleichsweise große Spaltbreiten innerhalb der vorstehend definierten Bereiche aufweisen können. Entsprechend können EIGA-Spulen mit Windungen vergleichsweise geringen Innendurchmessers vergleichsweise geringe Spaltbreiten innerhalb der vorstehend definierten Bereiche aufweisen.

In einer Weiterbildung kann die EIGA-Spule in Bezug auf Gestalt und/oder Dimensionen unterschiedliche Querschnittsgeometrien haben. Erfindungsgemäß weist die EIGA-Spule Abschnitte mit ovalem, kreisförmigem, rechteckigem, quadratischem, oder sonstigem Querschnitt auf. Die Querschnittsgeometrie der EIGA-Spule kann zum Beispiel innerhalb derselben Windung oder zwischen verschiedenen Windungen in der Gestalt und/oder den Dimensionen unterschiedlich sein.

Die EIGA-Spule kann insbesondere aus keramikfreiem Kupfermaterial hergestellt sein.

Die EIGA-Spule kann mittels eines additiven Fertigungsverfahrens hergestellt sein. Insbesondere kann die EIGA-Spule mittels eines 3D-Druck-Verfahrens hergestellt sein, beispielsweise mittels eines selektiven Laserschmelzverfahrens. Alternativ kann die EIGA-Spule mittels eines Elektronenstrahlschmelzverfahrens, mittels Binder Jetting oder einem sonstigen additiven Fertigungsverfahren hergestellt sein. Die Herstellung der erfindungsgemäßen EIGA-Spule mittels eines additiven Fertigungsverfahrens äußert sich insbesondere darin, dass hierdurch sehr geringe Spaltbreiten der Ringe realisierbar sind. Zudem können mittels eines additiven Fertigungsverfahrens Verbindungsabschnitte zwischen benachbarten Windungen gebildet werden, die sich senkrecht zu den Windungen erstrecken. Dies ist beides mit herkömmlichen Herstellverfahren von EIGA-Spulen nicht erreichbar. Bei herkömmlichen Herstellverfahren von EIGA-Spulen werden mit Sand gefüllte Kupferrohre zur Formung der Windungen der EIGA-Spule mittels einer vordefinierten Form gebogen, was die Formgebung der Windungen jedoch stark limitiert. Ein weiterer Aspekt der Erfindung betrifft eine Vorrichtung bzw. eine EIGA-Anlage zum Durchführen eines EIGA-Verfahrens. Die Vorrichtung umfasst eine EIGA-Spule der vorstehend beschriebenen Art. Ferner umfasst die Vorrichtung eine koaxial zu der Mehrzahl an Windungen angeordnete Elektrode aus abzuschmelzendem Metall bzw. abzuschmelzender Metalllegierung, die sich abschnittsweise in die EIGA-Spule hinein erstreckt und entlang einer Längsachse der Elektrode relativ zu der EIGA-Spule verlagerbar ist, um mittels der EIGA-Spule abgeschmolzen zu werden. Die Elektrode ist zudem um ihre Längsachse rotierbar. Des Weiteren umfasst die Vorrichtung eine koaxial zu der Elektrode und der Mehrzahl an Windungen angeordnete Düse bzw. Inertgasdüse zum Verdüsen von abgeschmolzenem Elektrodenmaterial.

Die Vorrichtung kann ferner einen Verdüsungsturm umfassen, in den das verdüste Elektrodenmaterial erstarren kann, um das sphärisch geformte, feinkörnige Pulver zu bilden.

Ein weiterer Aspekt der vorliegenden Erfindung betrifft ein EIGA-Verfahren zum Herstellen von hochreinem Metallpulver. Das Verfahren umfasst die Schritte:
- Verlagern einer Elektrode relativ zu einer EIGA-Spule der vorstehend beschriebenen Art wodurch die Elektrode abschnittsweise in das Innere der EIGA-Spule eingebracht wird;
- Anlegen von Wechselstrom an die EIGA-Spule zum Anschmelzen der Elektrode durch Erzeugung von in Bezug auf eine Längsachse der Elektrode azimutal symmetrischen Lorentz-Kräften; und
- Verdüsen von abgeschmolzenem Elektrodenmaterial mittels einer der EIGA-Spule nachgelagerten Inertgasdüse.

Die Elektrode kann während des Verfahrens um ihre Längsachse rotiert werden.

Obgleich einige Aspekte und Merkmale lediglich in Bezug auf die EIGA-Spule beschrieben worden sind, können diese entsprechend für die Vorrichtung bzw. EIGA-Anlage und/oder für das EIGA-Verfahren sowie entsprechende Weiterbildungen gelten und umgekehrt.

### Kurzbeschreibung der Figuren

Ausführungsbeispiele der vorliegenden Erfindung werden nachstehend in Bezug auf die beiliegenden schematischen Figuren näher erläutert. Es stellen dar:
- Fig. 1: eine perspektivische Ansicht einer EIGA-Spule gemäß einem Ausführungsbeispiel.
- Fig. 2: eine Vorderansicht der EIGA-Spule gemäß dem Ausführungsbeispiel aus Fig. 1.
- Fig. 3: eine Seitenansicht der EIGA-Spule gemäß dem Ausführungsbeispiel aus Fig. 1.
- Fig. 4: eine schematische Draufsicht auf die EIGA-Spule gemäß dem Ausführungsbeispiel aus Fig. 1.
- Fig. 5: eine schematische Darstellung der Verbindungsabschnitte einer EIGA-Spule gemäß einem weiteren Ausführungsbeispiel.
- Fig. 6: eine schematische Schnittdarstellung einer EIGA-Spule gemäß dem Ausführungsbeispiel aus Fig. 1.
- Fig. 7: eine schematische Schnittdarstellung einer EIGA-Anlage gemäß einem Ausführungsbeispiel in einem Ausgangszustand.
- Fig. 8: eine schematische Schnittdarstellung der EIGA-Anlage aus Fig. 9 in einem weiteren Zustand während des Betriebs.
- Fig. 9: eine schematische Schnittdarstellung einer EIGA-Anlage aus dem Stand der Technik in einem Ausgangszustand.
- Fig. 10: eine schematische Schnittdarstellung der EIGA-Anlage aus Fig. 7 in einem ausgelenkten Zustand.

### Figurenbeschreibung

Gleiche Bezugszeichen in den Figuren deuten auf gleiche, gleichwirkende und/oder analoge Elemente hin.

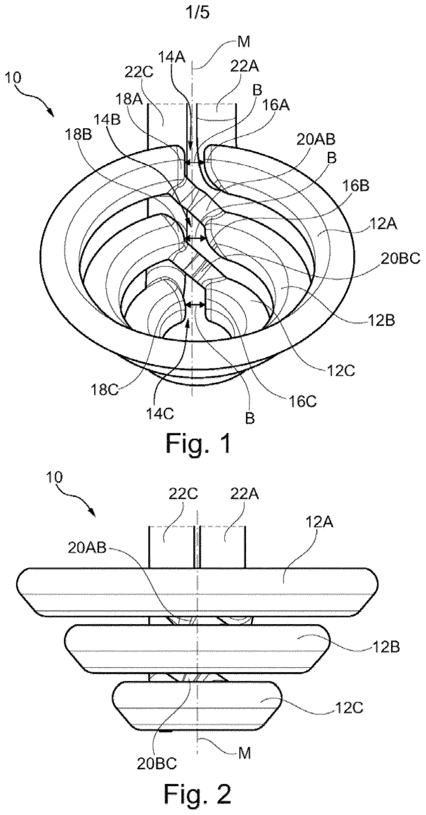

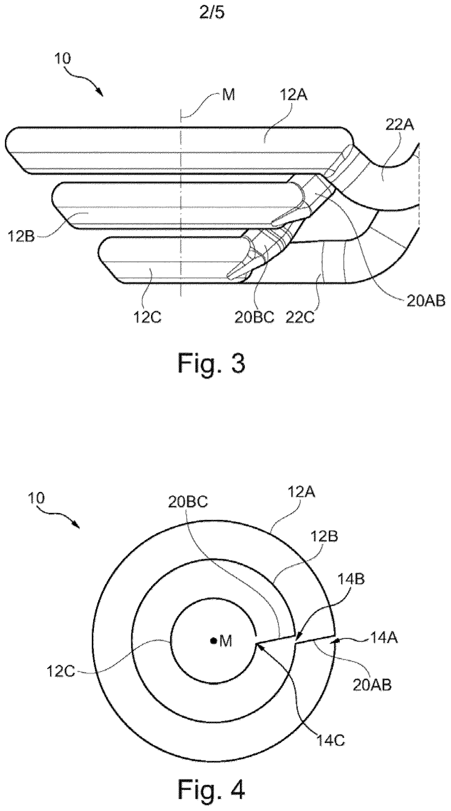

Die Figuren 1 bis 3 zeigen ein Ausführungsbeispiel der erfindungsgemäßen EIGA-Spule 10 zum An- und Abschmelzen einer Elektrode in einer perspektivischen Ansicht (Fig. 1), einer Vorderansicht (Fig. 2) und einer Seitenansicht (Fig. 3). Zudem zeigt Figur 4 eine schematische Draufsicht auf die EIGA-Spule 10.

Die EIGA-Spule 10, die eine Induktionsspule für eine EIGA-Anlage zum Durchführen eines EIGA-Verfahrens ist, umfasst eine Mehrzahl von Windungen 12A, 12B, 12C. In dem gezeigten Ausführungsbeispiel umfasst die EIGA-Spule 10 drei Windungen 12A, 12B, 12C. In anderen Ausführungsbeispielen kann die EIGA Spule auch mehr als drei Windungen umfassen.

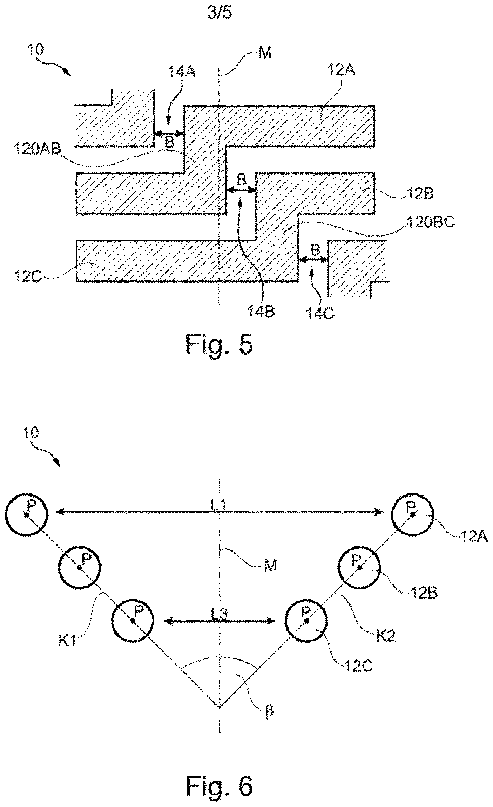

Die Windungen 12A, 12B, 12C sind in Bezug auf eine Mittelachse M der EIGA-Spule 10 koaxial zueinander angeordnet. Zudem sind die Windungen 12A, 12B, 12C in der Richtung der Mittelachse M betrachtet axial voneinander beabstandet. Die Windungen 12A, 12B, 12C haben jeweils unterschiedliche Innen- und Außendurchmesser, wobei die in den Figuren 1 bis 3 oberste Windung 12A den größten Innen- und Außendurchmesser der drei Windungen 12A, 12B, 12C hat und die in den Figuren 1 bis 3 unterste Windung 12C den geringsten Innen- und Außendurchmesser der drei Windungen 12A, 12B, 12C hat. Der Innen- und Außendurchmesser der zwischen der obersten Windung 12A und der untersten Windung 12C angeordneten mittleren Windung 12B liegt zwischen den Innen- bzw. Außendurchmessern der obersten Windung 12A und der untersten Windung 12C. Hierdurch weist die EIGA-Spule 10 in einer Gesamtbetrachtung eine konische Gestalt auf. Erfindungsgemäß weist wenigstens eine der Windungen (12A, 12B, 12C) in wenigstens einem Abschnitt einen ovalen, kreisförmigen, rechteckigen oder quadratischen Querschnitt auf. Im Betrieb ist die EIGA-Spule 10 so angeordnet, dass die oberste Windung 12A mit dem größten Innen- und Außendurchmesser einer Elektrodenaufhängung (nicht gezeigt) zugewandt ist und die unterste Windung 12B mit dem geringsten Innen- und Außendurchmesser einer Intergasdüse (nicht gezeigt) zugewandt ist. Beispielhafte Innendurchmesser sind im Zusammenhang mit Fig. 6 quantifiziert.

Jede der Windungen 12A, 12B, 12C hat die Gestalt eines durch einen jeweils zugehörigen Spalt 14A, 14B, 14C unterbrochenen Rings, genauer gesagt Ringtorus. Im Vergleich zu den Dimensionen der EIGA-Spule 10, insbesondere zu den Dimensionen der Windungen 12A, 12B, 12C, haben die Spalte 14A, 14B, 14C jeweils eine sehr geringe Breite B. Jeder der drei Spalte 14A, 14B, 14C kann beispielsweise eine Breite B zwischen 0,5 mm und 30 mm haben. Vorzugsweise sind die Spalte 14A, 14B, 14C jeweils mindestens 2 mm breit, um die Gefahr von Kurzschlüssen und/oder Funkenbildung zu minimieren. Da die Spalte 14A, 14B, 14C die Ringe 12A, 12B, 12C unterbrechen, sind diese nicht geschlossen, sodass jeder der Ringe 12A, 12B, 12C ein erstes Ende 16A, 16B, 16C und ein zweites Ende 18A, 18B, 18C aufweist. In dem gezeigten Ausführungsbeispiel sind die Breiten B der drei Spalte 14A, 14B, 14C gleich. In alternativen Ausführungsbeispielen können die verschiedenen Spalte jedoch auch unterschiedliche Breiten aufweisen.

Wie in den Figuren 1 bis 3 und insbesondere in Fig. 4 zu erkennen ist, ist jeder der Ringe 12A, 12B, 12C in Bezug auf die Mittelachse M der EIGA-Spule 10 äquidistant. Mit anderen Worten hat jeder der Ringe 12A, 12B, 12C entlang seiner Innenumfangsfläche betrachtet im Wesentlichen denselben Abstand von der Mittelachse M.

Ferner ist in den Figuren 1 bis 4 gezeigt, dass sich jede der Windungen 12A, 12B, 12C bzw. jeder der Ringe 12A, 12B, 12C nur in horizontaler Richtung ausgerichtet ist. Das heißt jede der Windungen 12A, 12B, 12C erstreckt sich nur innerhalb einer zu der Mittelachse M senkrechten, der jeweiligen Windungen 12A, 12B, 12C zugehörigen Ebene, genauer gesagt in derselben Ausrichtung wie diese zugehörige Ebene. Die Windungen 12A, 12B, 12C sind parallel zueinander ausgerichtet. Dies stellt einen wesentlichen Unterschied zu herkömmlichen EIGA-Spulen mit helixförmigen Windungen dar, bei denen sich die Windungen schraubenförmig in alle drei Raumrichtungen erstrecken.

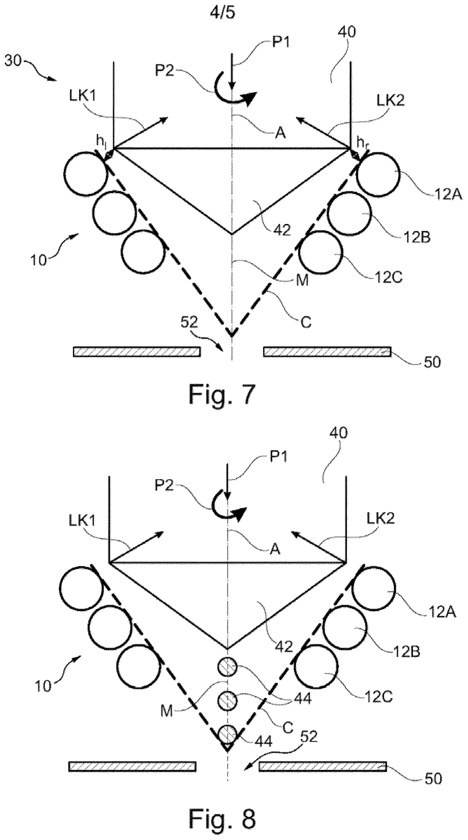

Da bei der erfindungsgemäßen EIGA-Spule 10 jede der Windungen 12A, 12B, 12C gemäß einer zugehörigen Ebene ausgerichtet ist, die senkrecht zu der Mittelachse M ist, und jede der Windungen bzw. jeder der Ringe 12A, 12B, 12C für sich äquidistant zu der Mittelachse M ist, können mittels der erfindungsgemäßen EIGA-Spule 10 auf die Elektrode wirkende azimutal symmetrische Lorentz-Kräfte erzeugt werden. Die daraus resultierenden Effekte und Vorteile sind nachstehend im Zusammenhang mit den Figuren 7 bis 10 näher erläutert.

Benachbarte Windungen 12A und 12B bzw. 12B und 12C der EIGA-Spule 10 sind jeweils über einen Verbindungsabschnitt 20AB, 20BC miteinander verbunden. Genauer gesagt verbindet der Verbindungsabschnitt 20AB das zweite Ende 18A der Windung 12A mit dem ersten Ende 16B der Windung 12B. Entsprechend verbindet der Verbindungsabschnitt 20BC das zweite Ende 18B der Windung 12B mit dem ersten Ende 16C der Windung 12C. In dem Ausführungsbeispiel der Fig. 1 weisen die Verbindungsabschnitte 20AB, 20BC eine gegenüber der Mittelachse M quer verlaufende Anordnung auf. Jedoch kann in anderen Ausführungsbeispielen bevorzugt eine andersartige Ausrichtung der Verbindungsabschnitte vorgesehen sein, was im Zusammenhang mit Fig. 5 näher beschrieben ist.

Das erste Ende 16A der obersten Windung 12A sowie das zweite Ende 18C der untersten Windung 12C sind jeweils über einen Anschlussabschnitt 22A, 22C mit einer Spannungsquelle zum Anlegen einer Wechselspannung an die EIGA-Spule 10 verbunden.

Die Windungen 12A, 12B, 12C, die Verbindungsabschnitte 20AB, 20BC und die Anschlussabschnitte 22A, 22C sind aus keramikfreiem Kupfermaterial hergestellt. Insbesondere sind die Windungen 12A, 12B, 12C, die Verbindungsabschnitte 20AB, 20BC und die Anschlussabschnitte 22A, 22C der EIGA-Spule 10 des gezeigten Ausführungsbeispiels hohlzylindrisch.

Wie aus Fig. 1 zu erkennen ist, haben die Verbindungsabschnitte 20AB, 20BC eine andere Querschnittsgeometrie als die Windungen 12A, 12B, 12C. In weiteren Ausführungsbeispielen können die Windungen und die Verbindungsabschnitte jedoch auch dieselbe Querschnittsgeometrie aufweisen.

Fig. 5 zeigt eine schematische Darstellung eines vergrößerten Ausschnitts der EIGA-Spule gemäß einem weiteren Ausführungsbeispiel. Der vergrößerte Ausschnitt zeigt eine besondere Ausgestaltung der Verbindungsabschnitte 120AB, 120BC, gemäß welcher sich die Verbindungsabschnitte 120AB, 120BC jeweils in der Ebene der Mittelachse M und somit im Wesentlichen senkrecht zu den Windungen 12A, 12B, 12C erstrecken. Die Windungen 12A, 12B, 12C erstrecken sich demnach im Betrieb und der gezeigten Darstellung horizontal, während sich die Verbindungsabschnitte 120AB, 120BC vertikal erstrecken. Diese strukturelle Ausbildung der Verbindungsabschnitte 120AB, 120BC in einer zu den Windungen 12A, 12B, 12C senkrechten Richtung ermöglicht eine Bereitstellung einer EIGA-Spule mit Spalten 14A, 14B, 14C besonders geringer Breite B. Durch das Vorsehen einer besonders geringen Breite B der Spalte 14A, 14B, 14C können die Windungen 12A, 12B, 12C in Form von nur geringfügig unterbrochenen und daher nahezu vollständigen Ringen ausgebildet sein, was die Symmetrie der Gesamtanordnung erhöht und das Aufbringen azimutal symmetrischer Lorentz-Kräfte auf die Elektrode weiter verbessert.

Fig. 6 zeigt eine schematische Schnittdarstellung einer EIGA-Spule 10 gemäß den vorstehenden Ausführungsbeispielen. In der EIGA-Spule 10 der Fig. 6 hat die oberste Windung 12A den größten Innendurchmesser L1 der Mehrzahl von Windungen 12A, 12B, 12C mit einem Betrag von bis zu 300 mm. Die unterste Windung 12C hat den geringsten Innendurchmesser L3 der Mehrzahl von Windungen 12A, 12B, 12C mit einem Betrag von wenigstens 10 mm.

Die EIGA-Spule 10 hat durch die gezeigte Anordnung der zueinander koaxialen und axial beabstandeten Windungen 12A, 12B, 12C mit unterschiedlichen Durchmessern in der Gesamtbetrachtung eine konische Gestalt. Zwei an der Mittelachse M gespiegelte Linien K1 und K2, die jeweils durch Mittelpunkte P der vertikalen Querschnitte der Windungen 12A, 12B, 12C verlaufen, spannen einen Winkel β zwischen 30° und 180° auf, vorzugsweise von 90°. Die Mittelpunkte P, durch welche die Linie K1 verläuft, liegen den Mittelpunkten P, durch welche die Linie K2 verläuft, in Bezug auf die Mittelachse M gegenüber.

Fig. 7 zeigt eine schematische Schnittdarstellung einer EIGA-Anlage 30 zum Durchführen eines EIGA-Verfahrens, die eine EIGA-Spule 10, eine Elektrode 40 mit einer Längsachse A und eine Inertgasdüse 50 umfasst. In Fig. 7 befindet sich die EIGA-Anlage in einem Ausgangszustand zu einem Zeitpunkt t = 0, der dem Zeitpunkt eines ersten Einschaltens der EIGA-Spule 10 entspricht. Zur verbesserten Darstellung der Ausrichtung der Komponenten der EIGA-Anlage zueinander ist in den Fig. 7 bis 10 jeweils ein durch die Windungen der EIGA-Spule gebildeter imaginärer Konus C durch strichlierte Linien dargestellt.

Die Elektrode 40 ist eine Stangenelektrode aus einem Metall oder einer Metalllegierung, die eine untere Spitze 42 umfasst. Die Elektrode 40 erstreckt sich im Bereich der unteren Spitze 42 in das Innere der EIGA-Spule 10 hinein, um mittels der mit Wechselstrom beaufschlagten EIGA-Spule 10 an- bzw. abgeschmolzen zu werden. Die Elektrode 40 ist koaxial zu den Windungen 12A, 12B, 12C der EIGA-Spule 10, das heißt die Längsachse A der Elektrode 40 liegt in einer Linie mit der Mittelachse M der EIGA-Spule. Die Elektrode 40 ist während des EIGA-Verfahrens entlang ihrer Längsachse A in Richtung der Inertgasdüse 50 kontinuierlich nachführbar, nach Maßgabe des abgeschmolzenen Volumens, was durch den Pfeil P1 angedeutet ist. Ferner ist die Elektrode 40 während des EIGA-Verfahrens um ihre Längsachse A rotierbar, um ein gleichmäßiges Abschmelzen sicherzustellen, was durch den Pfeil P2 angedeutet ist.

Die Inertgasdüse 50 ist der EIGA-Spule 10 und der Elektrode 40 nachgelagert, das heißt in der gezeigten Darstellung unterhalb dieser angeordnet. Die Inertgasdüse 50 umfasst eine Öffnung 52, die ebenfalls koaxial zu der Elektrode 40 und den Windungen 12A, 12B, 12C der EIGA-Spule 10 sind. Mit anderen Worten verlaufen die Längsachse A der Elektrode 40 und die Mittelachse M der EIGA-Spule 10 genau durch die Mitte der Öffnung 52 der Inertgasdüse 50.

Wie in Fig. 7 zu erkennen ist, hat die Windung 12A an jeder Stelle der Windung 12A denselben geringsten Abstand hₗ, hᵣ von der Elektrode 40. Dies ist auf die koaxiale Ausrichtung der Elektrode 40 und der EIGA-Spule 10 sowie auf die Erstreckung der Windungen 12A, 12B, 12C in einer jeweils zu der Mittelachse M senkrechten Ebene zurückzuführen. Gleiches gilt auch für die Windung 12B sowie für die Windung 12C der EIGA-Spule 10, was ebenfalls in Fig. 7 gezeigt, jedoch aus Gründern der Übersicht nicht durch Bezugszeichen verdeutlicht ist.

Durch die gleichmäßigen Abstände der Windungen 12A, 12B, 12C von der Elektrode 40 werden von der EIGA-Spule 10 auf die Elektrode 40 wirkende azimutal symmetrische Lorentz-Kräfte erzeugt. Die azimutal symmetrischen Lorentz-Kräfte sind durch die Pfeile LK1 und LK2 gleicher Länge verbildlicht. Durch die Spalte eingebrachte Asymmetrien sind aufgrund der sehr geringen Breite der Spalte vernachlässigbar.

Fig. 8 zeigt die EIGA-Anlage 30 der Fig. 7 zu einem späteren Zeitpunkt t = n, während eines Schmelzprozesses, bei dem durch das Abschmelzen der Elektrode 40 ein nahezu kontinuierlicher Schmelzstrahl aus Tropfen 44 abgeschmolzenen Materials von der Elektrode 40 tropft bzw. fließt. Da die von der EIGA-Spule 10 erzeugten Lorentz-Kräfte in Bezug auf die Elektrode 40 azimutal symmetrisch sind, heben sich die auf die Elektrode 40 wirkenden Lorentz-Kräfte gegenseitig auf, sodass die Elektrode 40 in dem in Fig. 8 gezeigten Zustand weiterhin gemäß dem Ausgangszustand ausgerichtet ist. Die Elektrode 40 wird also nicht gegenüber der Mittelachse M ausgelenkt, sondern bleibt während des gesamten EIGA-Prozesses koaxial zu der EIGA-Spule ausgerichtet. Demnach bleibt die Elektrode 40 während des Abschmelzens auch koaxial zu der Inertgasdüse 50 ausgerichtet. Der Schmelzstrahl bzw. die Tropfen 40 fallen somit stets in vertikaler Richtung (entlang der Längsachse A bzw. der Mittelachse M) zentral durch die Öffnung 52 der Inertgasdüse 50 hindurch und kommen somit nicht in Berührung mit der Wand der Inertgasdüse 50 oder den Windungen 12A, 12B, 12C der EIGA-Spule 10. Dies erhöht die Prozesssicherheit und reduziert mögliche Verunreinigungen oder Beschädigungen der EIGA-Anlage 30.

Die durch die Inertgasdüse 50 fallenden Tropfen 44 werden mittels der Inertgasdüse 50 zerstäubt und erstarren anschließend in einem nachgelagerten Verdüsungsturm. Hierdurch bilden die erstarrten Tropfen ein sphärisch geformtes, feinkörniges Pulver, welches in einem vakuumdichten Behälter aufgefangen und gesammelt wird.

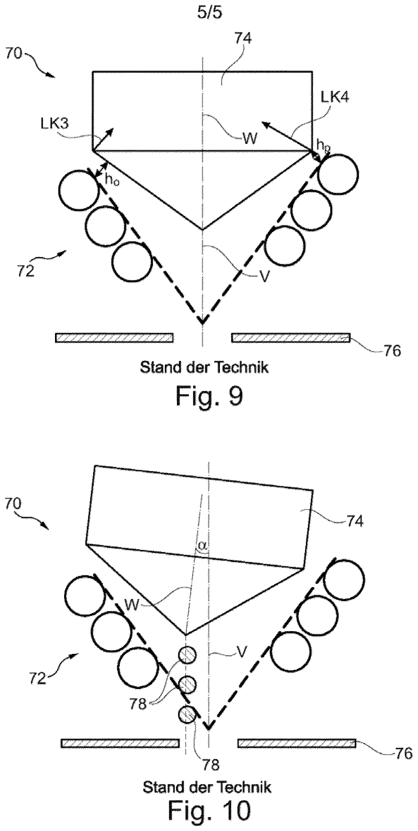

Die Vorteile der erfindungsgemäßen EIGA-Spule 10 gegenüber dem Stand der Technik werden aus einer Betrachtung der Figuren 9 und 10 weiter ersichtlich, welche eine herkömmliche EIGA-Anlage 70 in den in den Figuren 7 und 8 dargestellten Betriebszuständen zeigen.

Die EIGA-Anlage 70 des Standes der Technik umfasst eine helixförmige EIGA-Spule 72, eine Elektrode 74 und eine Inertgasdüse 76. In dem in Fig. 9 gezeigten Ausgangszustand t = 0, sind die EIGA-Spule 72, die Elektrode 74 und die Inertgasdüse 76 koaxial zueinander ausgerichtet. Das heißt eine Mittelachse V der EIGA-Spule 72 liegt mit einer Längsachse W der Elektrode 74 in einer Linie, die sich durch die Mitte der Inertgasdüse 76 erstreckt.

Im Unterschied zu der erfindungsgemäßen Anordnung haben die Windungen der EIGA-Spule 72 des Standes der Technik aufgrund der schraubenförmigen Struktur der EIGA-Spule 72 unterschiedliche Abstände zu der Elektrode 74. Dies ist durch die Abstände hₒ und hₚ beispielhaft verdeutlicht. Die unterschiedlichen Abstände der Windungen von der Elektrode 74 führen zu unterschiedlich starken auf die Elektrode 74 wirkenden Lorentz-Kräften, also zu einer azimutalen Asymmetrie der Lorentz-Kräfte. Dies ist in den Figuren 9 und 10 durch die Pfeile LK3 und LK4 unterschiedlicher Länge verbildlicht.

Die beschriebene azimutale Asymmetrie der auf die Elektrode 74 wirkenden Lorentz-Kräfte führt zu einer Auslenkung der Elektrode 74, genauer gesagt der Längsachse W der Elektrode 74, um den Winkel α. Dies ist in Fig. 10 zu erkennen, welches die EIGA-Anlage 70 der Fig. 9 zu einem späteren Zeitpunkt t = n während eines Schmelzprozesses zeigt.

Die einen Schmelzstrahl bildenden Tropfen 78 abgeschmolzenen Materials fallen in dem gezeigten Zustand in vertikaler Richtung von der um den Winkel α ausgelenkten Elektrode 74 in Richtung der Inertgasdüse 76. Aufgrund der Auslenkung fallen die Tropfen 78 bzw. der Schmelzstrahl nicht zentral durch die Öffnung der Inertgasdüse 76 hindurch, sondern versetzt zu der Mittelachse V. Dies kann dazu führen, dass die Tropfen 78 auf einen Rand der Intertgasdüse 76 fallen, dort erstarren und unter Umständen die Öffnung der Inertgasdüse 76 vollständig oder teilweise verschließen. Der negative Effekt kann durch die in der Regel stattfindende Rotation der Elektrode 74 weiter verstärkt werden. Auch kann es aufgrund der Auslenkung der Elektrode 74 dazu kommen, dass die Tropfen 78 oder die Elektrode 74 selbst in Berührung mit den Windungen der EIGA-Spule 72 gelangen, was zu Kurzschlüssen und einer Beschädigung der EIGA-Anlage 70 führen kann.

Diese Nachteile können durch die erfindungsgemäße EIGA-Spule und die damit erzeugbaren azimutal symmetrisch auf die Elektrode wirkenden Lorentz-Kräfte wirksam vermindert werden.

### Bezugszeichenliste

| | | | |
|---|---|---|---|
| 10 | EIGA-Spule | 70 | EIGA-Anlage (St.d.T) |
| 12A, 12B, 12C | Windung | 72 | EIGA-Spule (St.d.T.) |
| 14A, 14B, 14C | Spalt | 74 | Elektrode (St.d.T.) |
| 16A, 16B, 16C | erstes Ende der Windung | 76 | Inertgasdüse (St.d.T.) |
| 18A, 18B, 18C | zweites Ende der Windung | 78 | Tropfen (St.d.T.) |
| 20AB, 20BC | Verbindungsabschnitt | V | Mittelachse (St.d.T.) |
| 22A, 22B | Anschlussabschnitt | W | Längsachse (St.d.T.) |
| 120AB, 120BC | Verbindungsabschnitt | α | Auslenkungswinkel (St.d.T.) |
| 30 | EIGA-Anlage | LK3, LK4 | Lorentz-Kräfte (St.d.T.) |
| 32 | Ausgangsöffnung | hₒ, hₚ | Abstände (St.d.T.) |
| 40 | Elektrode | | |
| 42 | Elektrodenspitze | | |
| 44 | Tropfen | | |
| 50 | Inertgasdüse | | |
| 52 | Öffnung | | |
| M | Mittelachse | | |
| B | Breite | | |
| K1, K2 | Linien | | |
| P | Mittelpunkt | | |
| L1 | größter Innendurchmesser | | |
| L3 | geringster Innendurchmesser | | |
| β | aufgespannter Winkel | | |
| P1 | Pfeil Nachführbewegung | | |
| P2 | Pfeil Rotationsbewegung | | |
| A | Längsachse | | |
| C | imaginärer Konus | | |
| LK1, LK2 | Lorentz-Kräfte | | |
| hₗ, hᵣ | Abstände | | |

## Patentansprüche

1. EIGA-Spule (10) zum Anschmelzen einer Elektrode (40), umfassend eine Mehrzahl von in Bezug auf eine Mittelachse (M) koaxial zueinander angeordneten und axial voneinander beabstandeten Windungen (12A, 12B, 12C), wobei
jede der Mehrzahl von Windungen (12A, 12B, 12C) in Gestalt eines durch einen Spalt (14A, 14B, 14C) unterbrochenen Rings ausgebildet ist, der in Bezug auf die Mittelachse (M) äquidistant ist und sich in einer zu der Mittelachse (M) senkrechten Ebene erstreckt, und wobei
benachbarte Windungen (12A, 12B; 12B, 12C) der Mehrzahl von Windungen (12A, 12B, 12C) jeweils über einen Verbindungsabschnitt (20AB, 20BC; 120AB, 120BC) miteinander verbunden sind, und **dadurch gekennzeichnet dass**
wenigstens eine der Windungen (12A, 12B, 12C) in wenigstens einem Abschnitt einen ovalen, kreisförmigen, rechteckigen oder quadratischen Querschnitt aufweist, und der Spalt (14A, 14B, 14C) zwischen 0,5 mm und 30 mm breit ist.

2. EIGA-Spule (10) nach Anspruch 1, wobei wenigstens zwei Windungen (12A, 12B, 12C) der Mehrzahl von Windungen (12A, 12B, 12C) unterschiedliche Innendurchmesser (L1, L3) haben.

3. EIGA-Spule (10) nach Anspruch 1 oder 2, wobei sich der Verbindungsabschnitt (120AB, 120BC) parallel zu der Mittelachse (M) erstreckt.

4. EIGA-Spule (10) nach einem der vorangehenden Ansprüche, wobei der Spalt (14A, 14B, 14C) zwischen 2 mm und 20 mm breit ist, bevorzugt zwischen 5 mm und 10 mm.

5. EIGA-Spule (10) nach einem der vorangehenden Ansprüche, wobei eine Windung (12A) der Mehrzahl von Windungen (12A, 12B, 12C), die den größten Innendurchmesser (L1) aufweist, einen Innendurchmesser zwischen 40 mm und 300 mm hat.

6. EIGA-Spule (10) nach einem der vorangehenden Ansprüche, wobei eine Windung (12C) der Mehrzahl von Windungen (12A, 12B, 12C), die den geringsten Innendurchmesser (L3) aufweist, einen Innendurchmesser zwischen 10 mm und 100 mm hat, vorzugsweise zwischen 20 mm und 50 mm.

7. EIGA-Spule (10) nach einem der vorangehenden Ansprüche, die in Bezug auf Gestalt und/oder Dimensionen unterschiedliche Querschnittsgeometrien hat.

8. EIGA-Spule (10) nach einem der vorangehenden Ansprüche, die aus keramikfreiem Kupfermaterial hergestellt ist.

9. EIGA-Spule (10) nach einem der vorangehenden Ansprüche, die mittels eines additiven Fertigungsverfahrens hergestellt ist, vorzugsweise mittels eines 3D-Druck-Verfahrens.

10. Vorrichtung (30) zum Durchführen eines EIGA-Verfahrens, umfassend
eine EIGA-Spule (10) nach einem der vorangehenden Ansprüche;
eine koaxial zu der Mehrzahl an Windungen (12A, 12B, 12C) angeordnete Elektrode (40), die sich abschnittsweise in die EIGA-Spule (10) hinein erstreckt und entlang einer Längsachse (A) der Elektrode (40) relativ zu der EIGA-Spule (10) verlagerbar ist, um mittels der EIGA-Spule (10) abgeschmolzen zu werden; und
eine koaxial zu der Elektrode (40) und der Mehrzahl an Windungen (12A, 12B, 12C) angeordnete Düse (50) zum Verdüsen von abgeschmolzenem Elektrodenmaterial (44).

11. Verfahren zum Herstellen von hochreinem Metallpulver, das die Schritte umfasst:
- Verlagern einer Elektrode (40) relativ zu einer EIGA-Spule (10) nach einem der Ansprüche 1 bis 9;
- Anlegen von Wechselstrom an die EIGA-Spule (10) zum Anschmelzen der Elektrode (40) durch Erzeugung von in Bezug auf eine Längsachse (A) der Elektrode (40) azimutal symmetrischen Lorentz-Kräften (LK1, LK2); und
- Verdüsen von abgeschmolzenem Elektrodenmaterial (44).

## Claims

1. EIGAcoil (10) for melting an electrode (40), comprising a plurality of windings (12A, 12B, 12C) arranged coaxially to each other and axially spaced apart from each other with respect to a center axis (M), wherein
each of the plurality of windings (12A, 12B, 12C) is formed in the shape of a ring interrupted by a gap (14A, 14B, 14C) which is equidistant with respect to the center axis (M) and extends in a plane perpendicular to the center axis (M), and wherein
adjacent windings (12A, 12B, 12C) of the plurality of windings (12A, 12B, 12C) are respectively connected to one another via a connecting section (20AB, 20BC; 120AB, 120BC), and
**characterized in that**
at least one of the windings (12A, 12B, 12C) has an oval, circular, rectangular or square cross-section in at least one section, and the gap (14A, 14B, 14C) is between 0.5 mm and 30 mm wide.

2. EIGA coil (10) according to claim 1, wherein at least two windings (12A, 12B, 12C) of the plurality of windings (12A, 12B, 12C) have different inner diameters (L1, L3).

3. EIGA coil (10) according to claim 1 or 2, wherein the connecting section (120AB, 120BC) extends parallel to the center axis (M).

4. EIGA coil (10) according to any one of the preceding claims, wherein the gap (14A, 14B, 14C) is between 2 mm and 20 mm wide, preferably between 5 mm and 10 mm.

5. EIGA coil (10) according to any one of the preceding claims, wherein a winding (12A) of the plurality of windings (12A, 12B, 12C) having the largest inner diameter (L1) has an inner diameter between 40 mm and 300 mm.

6. EIGA coil (10) according to any one of the preceding claims, wherein a winding (12C) of the plurality of windings (12A, 12B, 12C) having the smallest inner diameter (L3) has an inner diameter between 10 mm and 100 mm, preferably between 20 mm and 50 mm.

7. EIGA coil (10) according to any one of the preceding claims, which has different cross-sectional geometries with respect to shape and/or dimensions.

8. EIGA coil (10) according to any one of the preceding claims, which is made of ceramic-free copper material.

9. EIGA coil (10) according to any one of the preceding claims, which is manufactured by means of an additive manufacturing process, preferably by means of a 3D printing process.

10. Device (30) for carrying out an EIGA process, comprising:
an EIGA coil (10) according to any one of the preceding claims;
an electrode (40) which is arranged coaxially to the plurality of windings (12A, 12B, 12C) and extends into the EIGA coil (10) in sections and can be shifted along a longitudinal axis (A) of the electrode (40) relative to the EIGA coil (10) in order to be melted off by means of the EIGA coil (10); and
a nozzle (50) disposed coaxially to the electrode (40) and the plurality of windings (12A, 12B, 12C) for atomizing melted off electrode material (44).

11. Method of producing high purity metal powder, comprising the steps:
displacing an electrode (40) relative to an EIGA coil (10) according to any one of claims 1 to 9;
applying alternating current to the EIGA coil (10) to melt the electrode (40) by generating azimuthally symmetric Lorentz forces (LK1, LK2) with respect to a longitudinal axis (A) of the electrode (40); and
atomizing melted off electrode material (44).

## Revendications

1. Bobine EIGA (10) pour la fusion d'une électrode (40), comprenant une pluralité de spires (12A, 12B, 12C) agencées coaxialement par rapport à un axe médian (M) les unes par rapport aux autres et espacées axialement les unes des autres, dans laquelle
chacune de la pluralité de spires (12A, 12B, 12C) est formée sous la forme d'un anneau interrompu par une fente (14A, 14B, 14C) qui est équidistante par rapport à l'axe médian (M) et s'étend dans un plan perpendiculaire à l'axe médian (M), et dans laquelle
des spires contiguës (12A, 12B ; 12B, 12C) de la pluralité de spires (12A, 12B, 12C) sont reliées les unes aux autres respectivement par le biais d'une section de liaison (20AB, 20BC ; 120AB, 120BC), et **caractérisée en ce que**
au moins une des spires (12A, 12B, 12C) présente dans au moins une section une section transversale ovale, circulaire, rectangulaire ou carrée, et la fente (14A, 14B, 14C) présente une largeur entre 0,5 mm et 30 mm.

2. Bobine EIGA (10) selon la revendication 1, dans laquelle au moins deux spires (12A, 12B, 12C) de la pluralité de spires (12A, 12B, 12C) présentent différents diamètres intérieurs (L1, L3).

3. Bobine EIGA (10) selon la revendication 1 ou 2, dans laquelle la section de liaison (120AB, 120BC) s'étend parallèlement à l'axe médian (M).

4. Bobine EIGA (10) selon l'une quelconque des revendications précédentes, dans laquelle la fente (14A, 14B, 14C) présente une largeur entre 2 mm et 20 mm, de préférence entre 5 mm et 10 mm.

5. Bobine EIGA (10) selon l'une quelconque des revendications précédentes, dans laquelle une spire (12A) de la pluralité de spires (12A, 12B, 12C) qui présente le plus grand diamètre intérieur (L1), présente un diamètre intérieur entre 40 mm et 300 mm.

6. Bobine EIGA (10) selon l'une quelconque des revendications précédentes, dans laquelle une spire (12C) de la pluralité de spires (12A, 12B, 12C) qui présente le plus petit diamètre intérieur (L3), présente un diamètre intérieur entre 10 mm et 100 mm, de préférence entre 20 mm et 50 mm.

7. Bobine EIGA (10) selon l'une quelconque des revendications précédentes, qui présente différentes géométries de section transversale par rapport à la forme et/ou aux dimensions.

8. Bobine EIGA (10) selon l'une quelconque des revendications précédentes, qui est fabriquée en matériau de cuivre exempt de céramique.

9. Bobine EIGA (10) selon l'une quelconque des revendications précédentes, qui est fabriquée au moyen d'un procédé de fabrication additive, de préférence au moyen d'un procédé d'impression 3D.

10. Dispositif (30) de mise en oeuvre d'un procédé EIGA comprenant
une bobine EIGA (10) selon l'une quelconque des revendications précédentes ;
une électrode (40) agencée de manière coaxiale à la pluralité de spires (12A, 12B, 12C) qui s'étend par sections dans la bobine EIGA (10) et peut être déplacée le long d'un axe longitudinal (A) de l'électrode (40) par rapport à la bobine EIGA (10) afin d'être fondue au moyen de la bobine EIGA (10) ; et
une buse (50) agencée de manière coaxiale à l'électrode (40) et à la pluralité de spires (12A, 12B, 12C) pour atomiser le matériau d'électrode (44) fondu.

11. Procédé de fabrication de poudre métallique à haute pureté qui comprend les étapes suivantes :
- le déplacement d'une électrode (40) par rapport à une bobine EIGA (10) selon l'une quelconque des revendications 1 à 9 ;
- l'application de courant alternatif à la bobine EIGA (10) pour la fusion de l'électrode (40) par génération de forces de Lorentz (LK1, LK2) symétriques de manière azimutale par rapport à un axe longitudinal (A) de l'électrode (40) ; et
- l'atomisation du matériau d'électrode (44) fondu.
